# EUROPÄISCHE PATENTSCHRIFT

(11) **EP 0 767 043 B1**
(45) Veröffentlichungstag und Bekanntmachung des Hinweises auf die Patenterteilung: **26.01.2000**
(21) Anmeldenummer: 96113223.0
(22) Anmeldetag: 17.08.1996
(51) Int. Cl.: B29C 45/17

(54) **Holmlose Schliesseinheit für eine Maschine für die Verarbeitung von spritzgiessfähigem Material**
Tiebar-less clamping unit for a machine processing material suitable for injection molding
Unité de fermeture sans colonnes pour une machine destinée à la transformation de matières injectables

(30) Priorität: 03.10.1995 AT 163295
(43) Veröffentlichungstag der Anmeldung: 09.04.1997
(73) Patentinhaber: Battenfeld Kunststoffmaschinen Ges.m.b.H., A-2542 Kottingbrunn (AT)
(72) Erfinder: Müssler, Richard, Ing., 7035 Steinbrunn (AT); Bleier, Harald, ing., 2700 Wiener Neustadt (AT)
(74) Vertreter: Gosdin, Michael, Dr.

(56) Entgegenhaltungen:
- WO-A-95/07171
- DE-A- 4 302 639
- DE-U- 29 513 862

## Beschreibung

Die Erfindung bezieht sich auf eine holmlose Schließeinheit für eine Maschine für die Verarbeitung von spritzgießfähigem Material, insbesondere für eine Kunststoff-Spritzgießmaschine, die aufweist:
- mindestens ein die Schließkraft übertragendes kraftübertragungselement, das aus einem unteren Verbindungsteil besteht, an dem seitlich je ein Seitenteil angeordnet ist,
- eine erste an einem Seitenteil des Kraftübertragungselements angeordnete Werkzeugträgerplatte,
- eine zweite Werkzeugträgerplatte, die zum Öffnen und Schließen des Werkzeugs in Schließrichtung des Werkzeugs verschiebbar ist,
- eine Stirnplatte, die an einem Seitenteil des Kraftübertragungselements angeordnet ist,
- ein aus mindestens zwei Teilen bestehendes Werkzeug, von dem jeweils eines an der ersten und an der zweiten Werkzeugträgerplatte angeordnet ist, und
- mindestens zwei Elemente zur Erzeugung einer Schließkraft, die zwischen der Stirnplatte und der zweiten Werkzeugträgerplatte angeordnet sind.

Eine holmlose Schließeinheit dieser Gattung ist aus der EP 0 311 133 B2 bekannt. Ein Kraftübertagungselement in Form eines "C" überträgt die Schließkraft eines einzigen Krafterzeugungselements. Um eine parallele Positionierung zwischen den beiden Werkzeughälften bzw. zwischen den beiden Werkzeugaufspannplatten zu bewerkstelligen, ist dort vorgesehen, daß ein Schwenk-Gelenk zwischen der Krafterzeugungeinheit und der verschiebbaren Werkzeugaufspannplatte angeordnet ist, so daß sich Schließkraft-bedingte Verformungen des Kraftübertragungselements in Schwenkrichtung des Gelenks ausgleichen.

Auch in der ebenfalls vorbekannten holmlosen Schließeinheit gemäß der EP 0 554 068 A1 ist ein Kraftübertragungselement vorhanden, das im wesentlichen aus dem Maschinenrahmen gebildet wird; dieses überträgt auch hier die Schließkraft eines hydraulischen Krafterzeugungselements. Das Spritzgießwerkzeug ist zwischen zwei Werkzeugträgerplatten gespannt. Dabei ist die eine Trägerplatte in Schließrichtung des Werkzeugs verschiebbar auf einem geeigneten Führungselement angeordnet. Des weiteren ist eine Stirnplatte vorhanden, wobei diese mit dem Maschinenrahmen fest verbunden ist. Zwischen der Stirnplatte und der einen Werkzeugträgerplatte wirkt das einzige Krafterzeugungselement. Am Kraftübertragungselement ist die feste Werkzeugträgerplatte schwenkbar um eine horizontale Achse gelagert. Weiterhin ist das Krafterzeugungselement sowohl an der Stirnplatte als auch an der beweglichen Werkzeugträgerplatte ebenfalls gelenkig gelagert.

Aus der WO 95/07171 ist eine holmlose Spritzgießmaschine bekannt, die die nachteilige Verformung des Kraftübertragungselements durch eine verbesserte Plattenparallelität ausschaltet. Dies wird durch freikragende, aktive Ausgleichselemente am Maschinenrahmen, die als Führung für die Schließplatte ausgelegt sind, erreicht.

Eine weitere aus dem Stand der Technik bekannte Lösung wird in der DE 43 02 639 A1 vorgeschlagen. Die Aufweitung des C-förmigen Gestells wird durch ein Paar Säulen, die sich durch den Hauptrahmen und die Grundplatte hindurch erstrecken, verhindert, da über die Säulen die Grundplatte mit dem Hauptrahmen verbunden ist.

Das Vorsehen von Gelenken ist im Stand der Technik weit verbreitet, da bei den offenen, holmlosen Maschinenrahmen Schließkraft-bedingte Verformungen auftreten, die zu Ungenauigkeiten und entsprechenden Qualitätseinbußen beim Spritzgießen führen. Durch die gelenkige Ausbildung wird hier Abhilfe geschafft, da die Gelenke auch bei Verformungen des Rahmens die konstante Schließkraftverteilung über die Werkzeughälften gewährleisten, nicht aber verschleißbedingte bzw. werkzeugspezifische Verformungen in beliebigen Richtungen ausgleichen können.

Nachteilhaft ist jedoch der hohe fertigungstechnische Aufwand bei der Produktion von Spritzgießmaschinen mit Gelenken. Da sehr hohe Kräfte (Zuhaltekraft des Werkzeugs) übertragen werden müssen, sind die Gelenke entsprechend massiv auszuführen, was zu hohen Kosten führt. Weiterhin ist die Zugänglichkeit zu den Auswerfern bei den bekannten Systemen durch die massiven Gelenkelemente stark behindert.

Der vorliegenden Erfindung liegt daher die **Aufgabe** zugrunde, eine holmlose Schließeinheit zu schaffen, die einen einfacheren Aufbau als die bekannten Einheiten hat und die die vorbeschriebenen Nachteile nicht aufweist.

Die **Lösung** der Aufgabe durch die Erfindung ist dadurch gekennzeichnet, daß die mindestens zwei Elemente zur Erzeugung der Schließkraft (10, 11) in einer in bezug auf den unteren Verbindungsteil (2) des Kraftübertragungselements (1) höhenversetzten Lage des Werkzeugs (7, 8) angeordnet sind, so daß geringfügige Verformungen des Kraftübertragungselements (1) durch unterschiedliche Stellbewegungen (x₁, x₂) der Elemente (10, 11) ausgeglichen werden, um eine konstante Schließkraftverteilung über die Trennebene der beiden Werkzeughälften (7, 8) zu gewährleisten.

Dieser Lösung liegt die Erkenntnis zugrunde, daß die üblicherweise bei holmlosen Spritzgießmaschinen zu beobachtenden Verformungen relativ klein sind und es ausreicht, kleine korrigierende Verstellbeträge auszuüben, um die konstante Schließkraftverteilung über die Trennebene der beiden Werkzeughälften zu gewährleisten.

In vorteilhafter Weise wird nunmehr erreicht, daß eine einfache und damit preiswerte Bauart für die Maschine vorgesehen werden kann, die zusätzlich eine bessere Zugänglichkeit und einen erweiterten Freiraum zum Auswerfer bietet.

Zweckmäßige Weiterbildungen der Erfindung sind Gegenstand der abhängigen Ansprüche.

Im Regelfall wird die Schließeinheit der Maschine so ausgebildet sein, daß vier Elemente zur Erzeugung der Schließkraft (10, 10', 11, 11') vorgesehen sind, die in den vier Eckbereichen der rechteckigen Werkzeugaufspannplatte (6) angeordnet sind, um dadurch Nicht-Parallelität der Werkzeughälften bedingt durch ungleichmäßige Verformung unter Schließkraft bzw. durch Verschleiß unter Beibehaltung einer gleichmäßigen Schließkraftverteilung auszugleichen.

Häufig kommen als Elemente zur Erzeugung der Schließkraft (10, 11) hydraulisch betätigte Kolben-Zylinder-Elemente zum Einsatz. Dabei kann dann alternativ vorgesehen sein, daß entweder die Elemente zur Erzeugung der Schließkraft (10, 11) von einer gemeinsamen Hydraulikölversorgungseinheit versorgt werden, wobei die Elemente (10, 11) mit dem gleichen Hydraulikdruck beaufschlagt werden, oder daß sie zwar von einer gemeinsamen Hydraulikölversorgungseinheit versorgt werden, die Elemente (10, 11) jedoch mit einem in einem bestimmten Verhältnis zueinander stehenden unterschiedlichen Hydraulikdruck beaufschlagt werden.

Eine Weiterbildung der Erfindung sieht vor, daß die Führung der beiden Werkzeugträgerplatten (5, 6) zueinander durch mindestens ein Führungselement (12) erfolgt, wobei sich mindestens eine Werkzeugträgerplatte (6) in Schließrichtung auf dem Führungselement (12) bewegen kann und wobei das Führungselement (12) derart an der Werkzeugträgerplatte (5) befestigt ist, daß es sich durch die Schließkraft relativ zum Kraftübertragungselement (1) nicht mit verformt.

Alternativ hierzu kann auch vorgesehen sein, daß wieder die Führung der beiden Werkzeugträgerplatten (5, 6) zueinander durch mindestens ein Führungselement (12) erfolgt, wobei sich mindestens eine Werkzeugträgerplatte (6) in Schließrichtung auf dem Führungselement (12) bewegen kann, wobei jetzt jedoch das Führungselement (12) starr mit einer Werkzeugträgerplatte (5) verbunden ist.

In der Zeichnung ist eine erfindungsgemäße Ausführungform dargestellt.
- Fig. 1: zeigt die Seitenansicht der Spritzgießmaschine bzw. deren Schließeinheit, bevor das Werkzeug geschlossen ist,
- Fig. 2: stellt den Fall dar, daß das Werkzeug mit der Zuhaltekraftbeaufschlagt wird und sich der Maschinenrahmen entsprechend verformt hat.

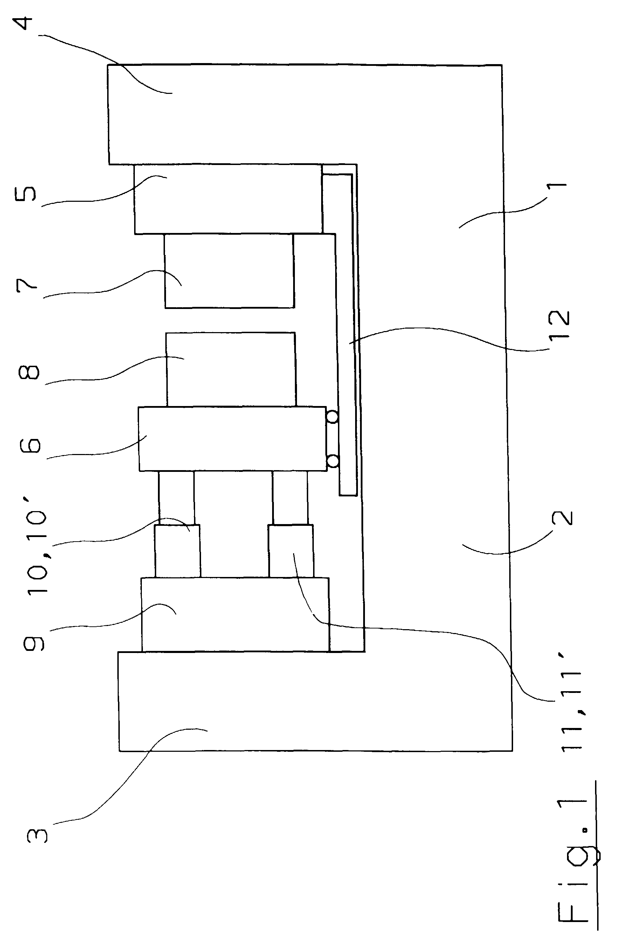

In Fig. 1 ist die holmlose Schließeinheit zu sehen. Sie besteht aus einem C-Rahmen-förmigen Kraftübertragungselement 1. Dieses besteht aus einem unteren Verbindungsteil 2, an das sich zwei Seitenteile 3 und 4 anschließen. An dem einen Seitenteil 4 ist eine erste, feste Werkzeugträgerplatte 5 angeordnet. Diese nimmt den einen Teil 7 eines zweiteiligen Spritzgießwerkzeugs auf. An dem anderen Seitenteil 3 ist eine Stirnplatte 9 befestigt. Wenngleich hier davon ausgegangen wird, daß die Stirnplatte ein separates Bauteil ist, kann natürlich genauso bereits das Seitenteil 3 so stabil ausgebildet sein, daß eine separate Stirnplatte als solche nicht erforderlich ist.

An der Stirnplatte 9 wirken - mindestens - zwei Elemente zur Erzeugung der Schließkraft 10 und 11. Sie stellen die Verbindung her zu der zweiten, beweglichen Werkzeugträgerplatte 6, die ebenfalls eine Werkzeughälfte 8 trägt. Die Führung der beweglichen Werkzeugträgerplatte 6 relativ zur festen Platte 5 wird durch ein Führungselement 12 bewerkstelligt, so daß ein paralleles Öffnen und Schließen des Werkzeugs möglich wird.

Statt den beiden in Fig. 1 sichtbaren Elemente zur Erzeugung der Schließkraft 10 und 11 können - was in praxi meist der Fall sein wird - vier Kraftelemente vorgesehen sein, die dann in den vier Ecken der Werkzeugträgerplatte angeordnet sind.

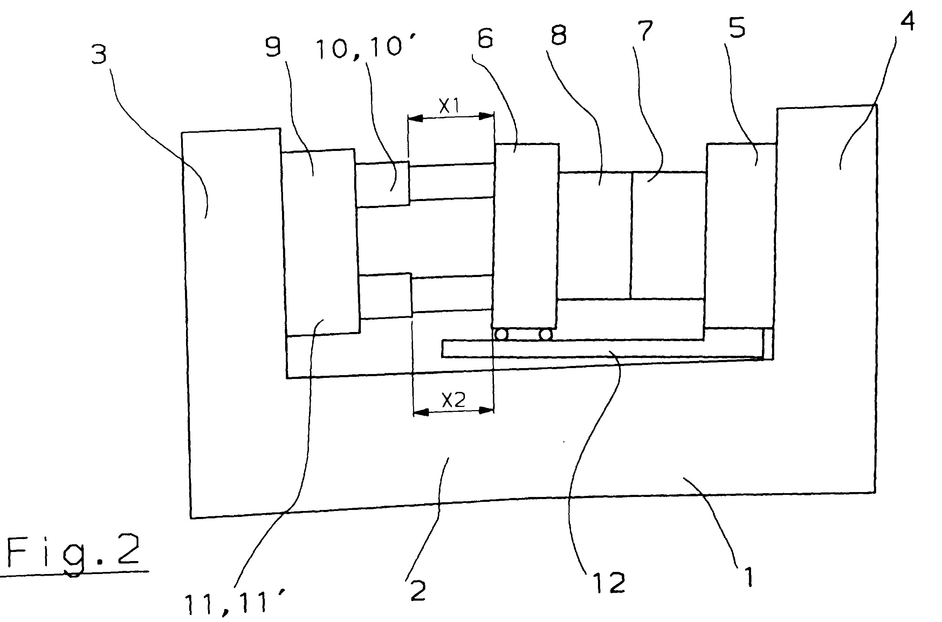

In Fig. 2 ist die Schließeinheit dargestellt, wenn sie unter Last steht, wenn also die Schließkraft durch die Elemente 10 (und 10') sowie 11 (und 11') erzeugt wird. Das Kraftübertragungselement 1 verformt sich unter der Schließkraft, wie es in Fig. 2 stark übertrieben dargestellt ist.

Erfindungsgemäß ist nun vorgesehen, daß die beiden Elemente zur Erzeugung der Schließkraft 10 und 11 in einer in bezug auf den unteren Verbindungsteil 2 des Kraftübertragungselements 1 höhenversetzten Lage des Werkzeugs 7, 8 angeordnet sind. D. h. der wirksame Abstand der beiden Elemente 10 bzw. 11 von dem - weitgehend unverformten - unteren Verbindungteil 2 ist unterschiedlich, so daß sich aufgrund der Geometrie bei einer Schließkraft-bedingten Verbiegung der Seitenteile 3 und 4 unterschiedliche Beträge ergeben, um die sich die Elemente 10 bzw. 11 ausdehnen müssen.

Die - geringfügigen- Verformungen des Kraftübertragungselements 1 werden nun durch unterschiedliche Stellbewegungen x₁ und x₂ der Elemente 10 und 11 ausgeglichen, wodurch eine konstante Schließkraftverteilung über die Trennebene der beiden Werkzeughälften 7 und 8 gewährleistet ist.

Als Elemente zur Erzeugung der Schließkraft werden im vorliegenden Fall hydraulische Kolben-Zylinder-Elemente eingesetzt. Es ist vorgesehen, daß beide bzw. alle vier Elemente 10, 10', 11 und 11' von einer gemeinsamen Hydraulikölversorgungseinheit versorgt werden. Dabei werden alle Kolben-Zylinder-Elemente mit dem gleichen Hydraulikdruck beaufschlagt. Das hat zur Folge, daß bei gleichmäßiger Kraftentwicklung in allen Elementen automatisch unterschiedliche Stellbewegungen x₁ bzw. x₂ ausgeführt werden, ohne, daß es hierfür besonderer Vorkehrungen bedürfte.

Es kann alternativ dazu auch vorgesehen sein, daß das Hydraulik-Druckverhälthis des oberen (10) zu dem unteren (11) Element in einem bestimmten Verhältnis zueinander vorgegeben wird. Damit kann erreicht werden, daß ein Werkzeug mit asymmetrisch positionierten Kavitäten und lokal angepaßter Schließkraft ordnungsgemäß zugehalten wird.

### Bezugszeichenliste:

- 1: Kraftübertragungselement
- 2: unteres Verbindungsteil
- 3, 4: Seitenteile
- 5: erste (feste) Werkzeugträgerplatte
- 6: zweite (verschiebbare) Werkzeugträgerplatte
- 7, 8: Werkzeug
- 9: Stirnplatte
- 10, 10' 11, 11': Elemente zur Erzeugung der Schließkraft
- 12: Führungselement
- x₁: Stellbewegung der Schließkraft-Elemente 10, 10'
- x₂: Stellbewegung der Schließkraft-Elemente 11, 11'

## Patentansprüche

1. Holmlose Schließeinheit für eine Maschine für die Verarbeitung von spritzgießfähigem Material, insbesondere für eine Kunststoff-Spritzgießmaschine, die aufweist:
- mindestens ein die Schließkraft übertragendes Kraftübertragungselement (1), das aus einem unteren Verbindungsteil (2) besteht, an dem seitlich je ein Seitenteil (3, 4) angeordnet ist,
- eine erste an einem Seitenteil (4) des Kraftübertragungselements (1) angeordnete Werkzeugträgerplatte (5),
- eine zweite Werkzeugträgerplatte (6), die zum Öffnen und Schließen des Werkzeugs (7, 8) in Schließrichtung des Werkzeugs verschiebbar ist,
- eine Stirnplatte (9), die an einem Seitenteil (3) des Kraftübertragungselements (1) angeordnet ist,
- ein aus mindestens zwei Teilen bestehendes Werkzeug (7, 8), von dem jeweils eines an der ersten und an der zweiten Werkzeugträgerplatte (5, 6) angeordnet ist, und
- mindestens zwei Elemente zur Erzeugung einer Schließkraft (10, 11), die zwischen der Stirnplatte (9) und der zweiten Werkzeugträgerplatte (6) angeordnet sind,
**dadurch gekennzeichnet,**
daß die mindestens zwei Elemente zur Erzeugung der Schließkraft (10, 11) in einer in bezug auf den unteren Verbindungsteil (2) des Kraftübertragungselements (1) höhenversetzten Lage des Werkzeugs (7, 8) angeordnet sind, so daß geringfügige Verformungen des Kraftübertragungselements (1) durch unterschiedliche Stellbewegungen (x₁, x₂) der Elemente (10, 11) ausgeglichen werden, um eine konstante Schließkraftverteilung über die Trennebene der beiden Werkzeughälften (7, 8) zu gewährleisten.

2. Holmlose Schließeinheit nach Anspruch 1, dadurch gekennzeichnet, daß vier Elemente zur Erzeugung der Schließkraft (10, 10', 11, 11') vorgesehen sind, die in den vier Eckbereichen der rechteckigen Werkzeugaufspannplatte (6) angeordnet sind.

3. Holmlose Schließeinheit nach Anspruch 1 oder 2, dadurch gekennzeichnet, daß die mindestens zwei Elemente zur Erzeugung der Schließkraft (10, 11) hydraulisch betätigte Kolben-Zylinder-Elemente sind.

4. Holmlose Schließeinheit nach Anspruch 3, dadurch gekennzeichnet, daß beide Elemente zur Erzeugung der Schließkraft (10, 11) von einer gemeinsamen Hydraulikölversorgungseinheit versorgt werden, wobei beide Elemente (10, 11) mit dem gleichen Hydraulikdruck beaufschlagt werden.

5. Holmlose Schließeinheit nach Anspruch 3, dadurch gekennzeichnet, daß beide Elemente zur Erzeugung der Schließkraft (10, 11) von einer gemeinsamen Hydraulikölversorgungseinheit versorgt werden, wobei beide Elemente (10, 11) mit einem in einem bestimmten Verhältnis zueinander stehenden unterschiedlichen Hydraulikdruck beaufschlagt werden.

6. Holmlose Schließeinheit nach mindestens einem der Ansprüche 1 bis 5, dadurch gekennzeichnet, daß die Führung der beiden Werkzeugträgerplatten (5, 6) zueinander durch mindestens ein Führungselement (12) erfolgt, wobei sich mindestens eine Werkzeugträgerplatte (6) in Schließrichtung auf dem Führungselement (12) bewegen kann und wobei das Führungselement (12) mit einer Werkzeugträgerplatte (5) starr verbunden ist, so daß das Führungselement (12) relativ zum Kraftübertragungselement (1) derart gelagert ist, daß es sich durch die Schließkraft nicht mit verformt.

## Claims

1. Closure unit without tie bar for a machine for processing injection-mouldable material, particularly for a plastic injection moulding machine which has:
- at least one force-transmission element (1) transmitting the closing force which comprises a lower connecting part (2), on which a side part (3, 4) is arranged laterally,
- a first mould support plate (5) arranged on a side part (4) of the force-transmission element (1),
- a second mould support plate (6) which can be displaced in the closing direction of the mould to open and close the mould (7, 8),
- a front plate (9) which is arranged on a side part (3) of the force-transmission element (1),
- a mould (7, 8) comprising at least two parts, of which one is arranged on the first and one on the second mould support plate (5, 6), and
- at least two elements for producing a closing force (10, 11) which are arranged between the front plate (9) and the second mould support plate (6),
characterised in that the at least two elements for producing the closing force (10, 11) are arranged in a vertically offset position of the mould (7, 8) with respect to the lower connecting part (2) of the force-transmission element (1), so that slight deformations of the force-transmission element (1) are compensated by different adjusting movements (x₁, x₂) of the elements (10, 11) to guarantee a constant closing force distribution over the separating plane of the two mould halves (7, 8).

2. Closure unit without tie bar according to claim 1, characterised in that four elements are provided to produce the closing force (10, 10', 11, 11'), which are arranged in the four corner regions of the rectangular mould clamping plate (6).

3. Closure unit without tie bar according to claim 1 or 2, characterised in that the at least two elements for producing the closing force (10, 11) are hydraulically actuated piston-cylinder elements.

4. Closure unit without tie bar according to claim 3, characterised in that both elements for producing the closing force (10, 11) are supplied by a common hydraulic oil supply unit, wherein both elements (10, 11) are exposed to the same hydraulic pressure.

5. Closure unit without tie bar according to claim 3, characterised in that both elements for producing the closing force (10, 11) are supplied by a common hydraulic oil supply unit, wherein both elements (10, 11) are exposed to a different hydraulic pressure being in a certain ratio to one another.

6. Closure unit without tie bar according to at least one of claims 1 to 5, characterised in that the two mould support plates (5, 6) are guided with respect to one another by at least one guide element (12), wherein at least one mould support plate (6) may be moved in the closing direction on the guide element (12) and wherein the guide element (12) is rigidly connected to a mould support plate (5), so that the guide element (12) is mounted relative to the force-transmission element (1) such that it is not also deformed by the closing force.

## Revendications

1. Bloc de fermeture sans longeron pour une machine pour la transformation de matière moulable par injection, en particulier pour une machine de moulage par injection des plastiques, qui présente :
- au moins un élément transmetteur de force (1) transmettant la force de fermeture qui est constitué d'une partie inférieure de liaison (2) sur chaque côté de laquelle est placée une partie latérale (3, 4),
- une première plaque porte-moule (5) placée sur une partie latérale (4) de l'élément transmetteur de force (1),
- une deuxième plaque porte-moule (6) qui est mobile dans la direction de fermeture du moule (7, 8) pour l'ouverture et la fermeture de celui-ci,
- une plaque frontale (9) placée sur une partie latérale (3) de l'élément transmetteur de force (1),
- un moule (7, 8) constitué d'au moins deux parties dont une est placée sur la première plaque porte-moule (5) et une autre placée sur la deuxième plaque porte-moule (6),
- au moins deux éléments pour la production d'une force de fermeture (10, 11) qui sont placés entre la plaque frontale (9) et la deuxième plaque porte-moule (6),
caractérisé par le fait
que les éléments de production de la force de fermeture (10, 11) sont placés dans une position du moule (7, 8) décalée en hauteur par rapport à la partie inférieure de liaison (2) de l'élément transmetteur de force (1), de sorte que les petites déformations de l'élément transmetteur de force (1) sont compensées par des mouvements de réglage différents (x1, x2) des éléments (10, 11) pour assurer une distribution constante de la force de fermeture dans le plan de séparation des deux moitiés de moule (7, 8).

2. Bloc de fermeture sans longeron selon la revendication 1, caractérisé par le fait qu'il est prévu quatre éléments de production de la force de fermeture (10, 10', 11, 11') qui sont placés dans les quatre zones de coin de la plaque porte-moule rectangulaire (6).

3. Bloc de fermeture sans longeron selon l'une des revendications 1 et 2, caractérisé par le fait que les éléments de production de la force de fermeture (10, 11) sont des vérins hydrauliques.

4. Bloc de fermeture sans longeron selon la revendication 3, caractérisé par le fait que les deux éléments de production de la force de fermeture (10, 11) sont alimentés par un groupe commun d'alimentation en fluide hydraulique et sont soumis à l'action de la même pression hydraulique.

5. Bloc de fermeture sans longeron selon la revendication 3, caractérisé par le fait que les deux éléments de production de la force de fermeture (10, 11) sont alimentés par un groupe commun d'alimentation en fluide hydraulique et sont soumis à l'action de pressions hydrauliques différentes qui sont dans un rapport déterminé.

6. Bloc de fermeture sans longeron selon au moins une des revendications 1 à 5, caractérisé par le fait que le guidage des deux plaques porte-moule (5, 6) l'une par rapport à l'autre est produit par au moins un élément de guidage (12), au moins une plaque porte-moule (6) pouvant se déplacer dans la direction de fermeture sur l'élément de guidage (12), et l'élément de guidage (12) étant joint rigidement à une plaque porte-moule (5), de sorte qu'il est monté par rapport à l'élément transmetteur de force (1) de façon à ne pas se déformer avec celui-ci par la force de fermeture.
